# EUROPEAN PATENT SPECIFICATION

(11) **EP 2 528 136 B1**
(45) Date of publication and mention of the grant of the patent: **02.07.2014**
(21) Application number: 11167865.2
(22) Date of filing: 27.05.2011
(51) Int. Cl.: H01M 2/10, H01M 10/04

(54) **Battery fixing system for fixing at least one vehicle battery**
Batteriebefestigungssystem zum Befestigen von mindestens einer Fahrzeugbatterie
Système de fixation de batterie pour fixer au moins une batterie de véhicule

(43) Date of publication of application: 28.11.2012
(73) Proprietor: IVECO MAGIRUS AG, 89079 Ulm (DE)
(72) Inventor: Vogel, Martin, 89129 LANGENAU (DE); Suelt, Daniel, 88319 AITRACH (DE); Spitz, Mario, 86381 KRUMBACH (DE)
(74) Representative: Cinquantini, Bruno

(56) References cited:
- JP-A- 2003 323 874
- US-A- 5 004 081
- US-A1- 2006 087 279

## Description

The present invention relates to a battery fixing system for fixing at least one vehicle battery in a trough-shaped casing of a vehicle.

Usually the batteries of vehicles are fixed by suitable clamping or tensioning means within respective battery seats that allow to exchange a battery with a comparably low effort. In one embodiment the battery seat is formed by a trough-shaped casing made of a plastic material comprising a bottom and drawn-up walls, that enclose the batteries laterally.

With commercial vehicles like motor trucks there is the problem that the common battery supports tend to loosen under the influence of strong vibrations, as they usually appear in the operation of such vehicles. However, a release of the batteries is to avoid under any circumstances for safety reasons. Until now there is no construction to fix the battery that resists the extreme operation conditions of a commercial vehicle over a long time period without the necessity to be controlled with respect to its correct securing function.

This problem arises especially when not only one but a plurality of batteries are to be fixed in a casing of the above kind. Typically two of such vehicle batteries are arranged next to each other within the casing. In this situation the additional problem arises to design the battery fixing system as simple as possible so that each of the batteries can be taken out after releasing the fixation. Moreover, the known fixing systems are bound to certain battery sizes and cannot be adapted to the dimensions of the batteries to be fixed. These dimensions can also change, depending on temperature. **An example of a known fixing system for a battery of a vehicle is disclosed in** US 5004081**.**

It is therefore an object of the present invention to provide a battery fixing system of the above kind that is resistible against vibrations and compensates tolerances of the batteries or other parts of the system as well as temperature dependent size changes of the battery, allowing a reliable fixing of the battery within the casing over a long operation period. Moreover, this system shall be easy to handle, allowing a simple release of the fixation and a take out of the battery (or one battery selected out of a set of batteries).

This object is achieved by a battery fixing system comprising the features of claim 1.

The battery fixing system according to the present invention provides at least one belt that is tensioned elastically over the top of the battery to be fixed. On one side of the battery, the belt is fixed to the casing. On the opposite side, the belt is tensioned downwards by a belt tensioning device such that the battery is pressed against the bottom of the casing. This tension is kept during the vehicle operation and also resists stronger vibrations. This is an advantage over rigid fixing devices like clamps or the like that can loosen with time under the influence of vibrations and have to be re-tensioned from time to time.

The belt tensioning device comprises a horizontal bar that extends over the at least one belt in a traverse direction. The bar is pressed down by the tension of a mechanic spring to exert a pulling force on the belt. For releasing the tension the bar must be lifted against the force of the spring. According to a preferred embodiment of the present invention, the battery fixing system is provided for fixing a plurality of vehicle batteries in a trough-like casing of a vehicle, wherein the batteries are arranged next to each other with a gap between at least two adjacent batteries. According to this embodiment, the ends of the belt are fixed to opposed sides of the casing, and the belt tensioning device is arranged within the gap between two adjacent batteries, wherein the at least one belt is guided as a pulling loop around the bar.

Whereas the at least one belt runs over the top of the batteries, it is pulled into the gap between the adjacent batteries by the belt tensioning device to create the tension for holding the batteries. For this purpose the belt loop is formed by guiding the belt around the horizontal bar, pushing down the bar towards the bottom of the casing by means of the tension of the spring.

According to another preferred embodiment of the present invention, the belt tensioning device comprises at least one shaft protruding vertically within the gap and extending through the bar, the bar being slidable on the shaft in a vertical direction. In this case two shafts can be used to guide the bar with a sufficient mechanical stability but to keep it slidable in the vertical direction.

Preferably the spring is an elastically compressible torsion spring that is wound around the shaft and lies between the bar and an extended upper end of the shaft.

More preferably the shaft comprises a bolt that is screwed into a support fixed to the casing or into the bottom of the casing. This support can be, for example, a traverse profile extending in the lower portion of the gap parallel to the bar, the shafts protruding from this profile. The bolt can lie within a sleeve that defines how far the bolt is screwed into the support or the bottom of the casing so that the sleeve defines the length of the shaft.

More preferably the belt is guided on top of the at least one battery by at least one guiding element.

Preferably this guiding element comprises a rigid rail that extends on the top side of the battery from one edge to another. This rail provides that the pressure exerted by the at least one belt is distributed uniformly over the whole width of the battery. Moreover, the guiding element can provide a smooth sliding of the belt over the top of the battery without an excessive mechanical resistance. Particularly it can be avoided that the belt is getting caught at edges or obstacles on the top side of the battery. It is also possible to form the rail such that it extends slightly over the lateral edges of the battery to reduce pressure and friction at these areas.

According to another aspect, the present invention relates to a battery assembly in a vehicle, comprising a trough-shaped casing with a bottom and a wall drawn-up from the bottom, two vehicle batteries arranged within the casing with a gap there between, and a battery fixing system according to one of the preceding claims, comprising a pair of parallel belts, the ends of these belts be fixed to opposed sides of the wall of the casing, said belts extending over the top sides of the batteries and being pulled down in pulling loops by the bar of the belt tensioning device in the gap between the batteries.

These and other aspects of the invention will be apparent from and illucidated with reference to a preferred embodiment described hereinafter.
- Fig. 1: is a lateral section of one embodiment of a battery fixing system according to the present invention;
- Fig. 2: is a detailed view of the battery fixing system of claim 1 according to a section along the plane B-B in Fig. 4;
- Fig. 3: is a view of a part of the battery fixing system of Fig. 2 according to a section along plane A-A in Fig. 4; and
- Fig. 4: is a top view of the embodiment of the battery fixing system according to the present invention as shown in Fig. 1 to 3.

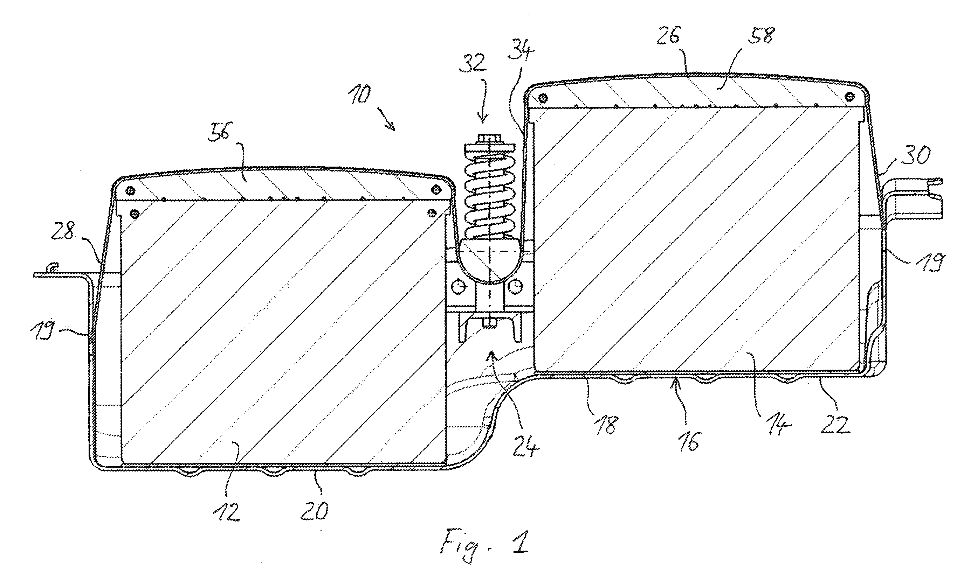

The battery fixing system 10 of Fig. 1 is provided to fix two vehicle batteries 12,14 in a vehicle (not shown), especially in a commercial vehicle. The vehicle batteries 12,14 are block shaped and they are arranged in a trough-shaped casing 16 that is a plastic member formed by deep drawing. In particular said casing comprises a bottom 18 and a drawn-up wall 19 enclosing the batteries 12,14. The bottom 18 comprises two bottom portions 20,22 stepped towards each other in a vertical direction. On the lower bottom portion 20, the battery 12 on the left side of Fig. 1 is supported, while the higher bottom portion 22 supports the right battery 14. The batteries 12,14 are arranged next to each other such as to form a gap 24 between them.

In the casing 16, the batteries 12,14 are held by tensioned belts, only one of these belts 26 being shown in the view of Fig. 1. This belt 26 runs over the top side of the batteries 12,14 and is fixed to the wall 19 of the casing 16 with its opposed ends 28,30. In the gap 24 between the batteries 12,14, the belt 26 is drawn downwards by a belt tensioning device designated by reference number 32. This belt tensioning device 32 pulls the belt 26 downwards in form of a pulling loop 34, pulling with an elastic tensioning force, as will be further explained in the following. This elastic tension provides a sufficient pressure to keep down the batteries 12,14 within the casing 16 and to press them against the bottom 18.

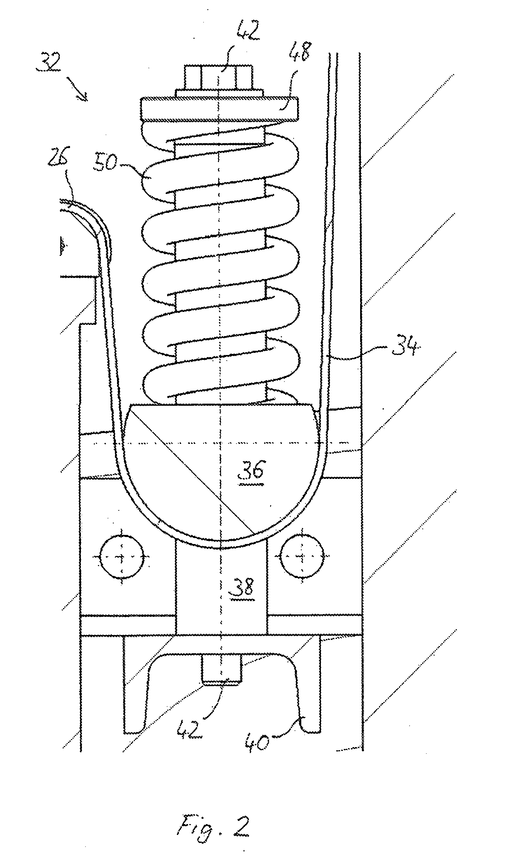

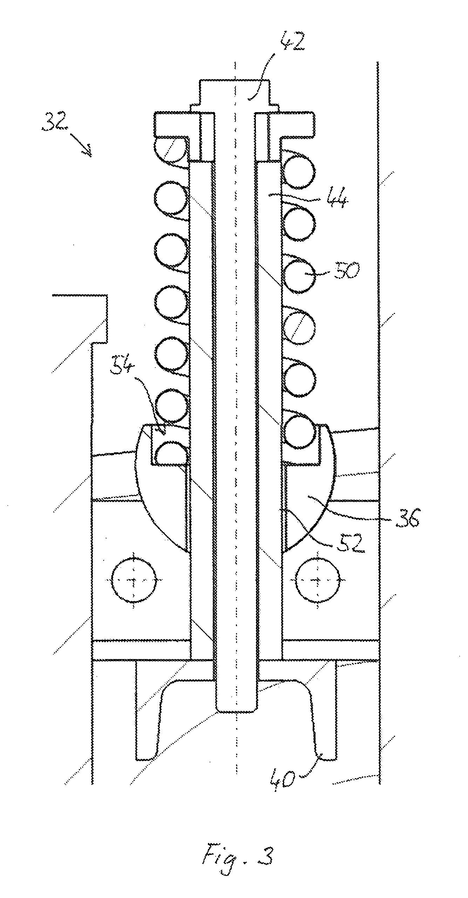

Details of the belt tensioning device 32 are shown in Fig. 2. The belt tensioning device 32 comprises a horizontal bar 36 with a lower cross-section in form of a segment of a circle. The bar 36 is further provided with vertical bores extending perpendicular to the horizontal longitudinal axis of the bar 36. Within these bores, shafts 38 are arranged that stand vertical with respect to the bottom 18 of the casing 16. The shafts 38 are mounted on traverse profiles 40 that are shown in Fig. 1 and 3 in a cross-section and that extend between opposed portions of the wall 19 of the casing 16. Details of the bar 36 and the shaft 38 can be taken from Fig. 3, being a section along the main longitudinal axis of the shaft 38. In its central portion, the shaft 38 comprises a bolt 42. The bolt 42 is screwed with its lower end into a female thread of the traverse profile 40. Alternatively, it can also be screwed into a welding nut on the traverse profile 40. With its radial extended upper head 46, the bolt 42 presses a circular thrust washer 48 downwards onto the upper end of a sleeve 44 surrounding the bolt 42 so that the sleeve 44 is clamped between the thrust washer 48 and the upper side of the lateral profile 40 when the bolt 42 is tightened.

Around the shaft 38 a torsion spring 50 is wound that extends in the vertical direction between the thrust washer 48 and the bar 36. To receive the lower end of the torsion spring 50, the bore 52 through which the shaft 38 extends comprises a radial extension 54 on the upper side of the bar 36. The bottom side of the thrust washer 48 forms a stopping surface for the upper end of the torsion spring 50.

The torsion spring 50 is elastically compressible. Such a compression can be achieved by shifting the bar 36 onto the shaft 38 upwards against the resistance of the torsion spring 50.

As shown in Fig. 1 and 2, the belt 26 is guided around the bottom side of the bar 36 to form the pulling loop 34. By the pressure of the torsion spring 50, the belt 26 is pulled downwards at both sides of the gap 24 by means of the elastic force of the spring 50. The tensioning force of the at least one belt 26 is defined by the height of the shaft 38 and by the length of the tensioned torsion spring 50. It is obvious from Fig. 1 that the length of the belt 26 is to choose such that in the fixing position of the batteries 12,14, the torsion spring 50 is compressed partially but not completely so that the pulling loop 34 is kept under an elastic tension but a further compression of the spring 50 is still possible. In this situation the belt 26 is kept under an elastic tension to press the batteries 12,14 downwards against the bottom 18 of the casing 16.

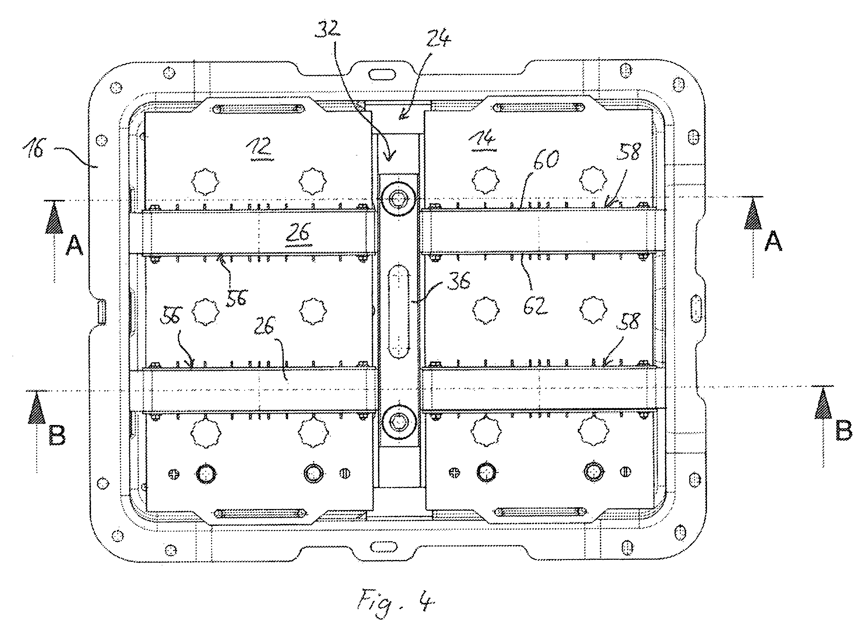

Fig. 1 further shows guiding elements 56,58 for the belt 26 that lie on the upper surfaces of the batteries 12,14 and extend over the whole width of the respective battery 12,14. These guiding elements 56,58 are rails that extend over the upper sides of the batteries 12,14 from one lateral edge to another. These rails are also shown in Fig. 4. On their upper sides the rails 56,58 they are provided with lateral fillets 60,62 between which the belts 26 are arranged. They prevent a lateral sliding of the belts 26. The rails 56,58 provide a relatively uniform distribution of the pressure exerted downwards by the belt 26 over the whole surface of the respective battery 12,14. Moreover, it is prevented that the belt 26 runs directly over the upper lateral edges of the batteries 12,14 and is damaged by this interference. For this purpose the ends of the rails 56,58 are also rounded to improve the sliding of the belts 26 over the ends.

It can be taken from Fig. 4 that both batteries 12,14 are fixed by two parallel belts 26 in the casing 16. These belts 26 are pulled down elastically into the gap 24 by the common bar 36 of the belt tensioning device 32, as described above. For this purpose the bar 36 is supported slidable in the vertical direction on two shafts 38 of the kind described above, the shafts 38 being arranged outside the pathways of the belts 26.

Because the batteries 12,14 are fixed by the belt tensioning device 32 under elastic tension, it is impossible to release the battery fixing system 10 according to the present invention by strong and continuing vibrations as they occur in the vehicle operation. Consequently the batteries 12,14 are fixed in a reliable fashion. A release of the battery fixing system 10 is possible by releasing the tension of the springs 50, screwing out the bolts 42 and taking out a bar 36. Then the belts 26 can put aside, and the batteries 12,14 can be taken out.

## Claims

1. Battery fixing system (10) suitable for fixing a plurality of vehicle batteries (12,14) in a trough-shaped casing (16) of a vehicle, said batteries (12,14) being suitable to be arranged next to each other with at least one gap (24) between two adjacent batteries (12,14), **characterized in that** it comprises at least one belt (26) whose ends are fixable to opposite sides of the casing (16), said at least one belt (26) being extendable over the top of said batteries (13,14) said system comprising a belt tensioning device (32) to tension the belt (26) downwards, said belt tensioning device (32) comprising a horizontal bar (36) extending over the belt (26) in a traverse direction, and a spring (50) for biasing the bar (36) elastically downwards, wherein said belt tensioning device (32) is suitable to be arranged within the gap (24) between said adjacent batteries (12,14), and wherein said belt (26) is guided around the bar (36) as a pulling loop (34).

2. Battery fixing system according to claim 1, **characterized in that** the belt tensioning device (32) comprises at least one shaft (38) protruding vertically within the gap (24) and extending through the bar (36) so that the bar (36) is slidable on the shaft (38) in a vertical direction.

3. Battery fixing system according to claim 2, **characterized in that** the spring (50) is an elastically compressible torsion spring that is wound around on the shaft (38) and arranged between the bar (36) and an extended upper end of the shaft (38).

4. Battery fixing system according to claim 2 or 3, **characterized in that** the shaft (38) comprises a bolt (42) that is screwed into a support that is fixed to the casing (16) or into the bottom of the casing (16).

5. Battery fixing system according to one of the preceding claims, **characterized in that** it comprises a guiding element suitable for guiding the belt (26) on top of the at least one battery.

6. Battery fixing system according to claim 5, **characterized in that** said guiding element comprises a rigid rail (56,58) extendable completely over the top surface of the battery (12,14) from one edge to another.

7. Battery assembly in a vehicle, comprising a trough-shaped casing (16) with a bottom (18) and a wall (19) drawn-up from the bottom (18), two vehicle batteries (12,14) arranged within the casing (16) with a gap (24) therebetween, and a battery fixing system (10) according to one of the preceding claims, comprising a pair of parallel belts (26), the ends (28,30) of these belts (26) be fixed to opposed sides of the wall (19) of the casing (16), said belts (26) extending over the top sides of the batteries (12,14) and being pulled down in pulling loops (34) by the bar (36) of the belt tensioning device (32) in the gap (24) between the batteries (12,14).

## Patentansprüche

1. Batterie-Fixiersystem (10), geeignet zum Fixieren einer Vielzahl von Fahrzeugbatterien (12, 14) in einem wannenförmigen Gehäuse (16) eines Fahrzeugs, wobei die Batterien (12, 14) geeignet sind, nahe beieinander angeordnet zu sein mit wenigstens einem Abstand (24) zwischen zwei benachbarten Batterien (12, 14), **dadurch gekennzeichnet, daß** es wenigstens einen Gurt (26) umfasst, dessen Enden fixierbar sind an gegenüber liegenden Seiten des Gehäuses (16), der wenigstens eine Gurt (26) erstreckbar ist über das obere Ende der Batterien (13, 14), das System eine Gurtspann-Vorrichtung (32) umfaßt, um den Gurt (26) nach unten zu spannen, die Gurtspann-Vorrichtung (32) einen waagerechten Stab (36) umfaßt, der sich über den Gurt (26) in Querrichtung erstreckt, und eine Feder (50) zum elastischen Vorspannen des Stabes (36) nach unten, worin die Gurtspann-Vorrichtung (32) geeignet ist, innerhalb des Abstandes (24) zwischen den benachbarten Batterien (12, 14) angeordnet zu sein, und worin der Gurt (26) um den Stab (36) geführt wird als Schlaufe (34) zum Ziehen.

2. Batterie-Fixiersystem nach Anspruch 1, **dadurch gekennzeichnet, daß** die Gurtspann-Vorrichtung (32) wenigstens einen Schaft (38) aufweist, der vertikal in dem Abstand (24) hervorsteht und sich durch den Stab (36) erstreckt, so daß der Stab (36) an dem Schaft (38) in einer vertikalen Richtung verschiebbar ist.

3. Batterie-Fixiersystem nach Anspruch 2, **dadurch gekennzeichnet, daß** die Feder (50) eine elastisch zusammendrückbare Torsionsfeder ist, die um den Schaft (38) gewunden ist und zwischen dem Stab (36) und dem verlängerten oberen Ende des Schafts (38) angeordnet ist.

4. Batterie-Fixiersystem nach Anspruch 2 oder 3, **dadurch gekennzeichnet, daß** der Schaft (38) einen Bolzen (42) umfaßt, der in einen Träger geschraubt ist, der an dem Gehäuse (16) oder in dem Boden des Gehäuses (16) befestigt ist.

5. Batterie-Fixiersystem nach einem der vorangehenden Ansprüche, **dadurch gekennzeichnet, daß** es ein Führungselement umfaßt, das geeignet ist zum Führen des Gurtes (26) an dem oberen Ende der wenigstens einen Batterie.

6. Batterie-Fixiersystem nach Anspruch 5, **dadurch gekennzeichnet, daß** das Führungselement eine starre Schiene (56, 58) umfaßt, die vollständig extreckbar ist über die obere Oberfläche der Batterie (12, 14) von einer Ecke zur anderen.

7. Batterie-Anordnung in einem Fahrzeug, umfassend ein wannenförmiges Gehäuse (16) mit einem Boden (18) und einer Wand (19), die aus dem Boden (18) gezogen ist, zwei Fahrzeugbatterien (12, 14), die in dem Gehäuse (16) mit einem Abstand (24) dazwischen angeordnet sind, und ein Batterie-Fixiersystem (10) nach einem der vorangehenden Ansprüche, umfassend ein Paar von parallelen Gurten (26), die Enden (28, 30) dieser Gurte (26) an gegenüber liegenden Seiten der Wand (19) des Gehäuses (16) fixiert sind, die Gurte (26) sich über die oberen Seiten der Batterien (12, 14) erstrecken und nach unten gezogen werden durch Schlaufen (34) zum Ziehen mittels des Stabs (36) der Gurtspann-Vorrichtung (32) in dem Abstand (24) zwischen den Batterien (12, 14).

## Revendications

1. Système de fixation de batteries (10) qui convient pour fixer une pluralité de batteries de véhicule (12, 14) dans un boîtier en forme d'auge (16) d'un véhicule, lesdites batteries (12, 14) étant aptes à être agencées les unes à côté des autres avec au moins un entrefer (24) entre deux batteries adjacentes (12, 14), **caractérisé en ce qu'**il comprend au moins une courroie (26) dont les extrémités peuvent être fixées à des côtés opposés du boîtier (16), ladite au moins une courroie (26) étant extensible sur le dessus desdites batteries (13, 14), ledit système comprenant un dispositif tendeur de courroie (32) pour tendre la courroie (26) vers le bas, ledit dispositif tendeur de courroie (32) comprenant une barre horizontale (36) s'étendant sur la courroie (26) dans une direction transversale, et un ressort (50) pour solliciter la barre (36) d'une manière élastique vers le bas, où ledit dispositif tendeur de courroie (32) est apte à être agencé dans l'entrefer (24) entre lesdites batteries adjacentes (12, 14), et où ladite courroie (26) est guidée autour de la barre (36) comme une boucle de traction (34).

2. Système de fixation de batteries selon la revendication 1, **caractérisé en ce que** le dispositif tendeur de courroie (32) comprend au moins un arbre (38) faisant saillie verticalement dans l'entrefer (24) et s'étendant à travers la barre (36) de sorte que la barre (36) peut coulisser sur l'arbre (38) dans une direction verticale.

3. Système de fixation de batteries selon la revendication 2, **caractérisé en ce que** le ressort (50) est un ressort de torsion compressible élastiquement qui est enroulé autour de l'arbre (38) et agencé entre la barre (36) et une extrémité supérieure étendue de l'arbre (38).

4. Système de fixation de batteries selon la revendication 2 ou 3, **caractérisé en ce que** l'arbre (38) comprend un boulon (42) qui est vissé dans un support qui est fixé au boîtier (16) ou dans le fond du boîtier (16).

5. Système de fixation de batteries selon l'une quelconque des revendications précédentes, **caractérisé en ce qu'**il comprend un élément de guidage apte à guider la courroie (26) sur le dessus de ladite au moins une batterie.

6. Système de fixation de batteries selon la revendication 5, **caractérisé en ce que** ledit élément de guidage comprend un rail rigide (56, 58) extensible complètement sur la surface supérieure de la batterie (12, 14) d'un bord à un autre.

7. Ensemble de batteries dans un véhicule, comprenant un boîtier en forme d'auge (16) avec un fond (18) et une paroi (19) remontant du fond (18), deux batteries de véhicule (12, 14) agencées dans le boîtier (16) avec un entrefer (24) entre celles-ci, et un système de fixation de batteries (10) selon l'une des revendications précédentes, comprenant une paire de courroies parallèles (26), les extrémités (28, 30) de ces courroies (26) étant fixées à des côtés opposés de la paroi (19) du boîtier (16), lesdites courroies (26) s'étendant sur les côtés supérieurs des batteries (12, 14) et étant tirées vers le bas dans des boucles de traction (34) par la barre (36) du dispositif tendeur de courroie (32) dans l'entrefer (24) entre les batteries (12, 14).
